# EUROPÄISCHE PATENTSCHRIFT

(11) **EP 0 954 402 B1**
(45) Veröffentlichungstag und Bekanntmachung des Hinweises auf die Patenterteilung: **11.12.2002**
(21) Anmeldenummer: 98904087.8
(22) Anmeldetag: 17.01.1998
(51) Int. Cl.: B23K 1/00, B23K 3/047

(54) **VORRICHTUNG ZUM VERBINDEN MEHRERER EINZELTEILE ZU EINEM BRILLENGESTELL**
DEVICE FOR ASSEMBLING SEVERAL INDIVIDUAL PARTS TO FORM A SPECTACLE FRAME
DISPOSITIF POUR ASSEMBLER PLUSIEURS PIECES INDIVIDUELLES EN UNE MONTURE DE LUNETTES

(30) Priorität: 21.01.1997 DE 19701894
(43) Veröffentlichungstag der Anmeldung: 10.11.1999
(73) Patentinhaber: Bokesch, Martin, 73529 Schwäbisch Gmünd (DE)
(72) Erfinder: Bokesch, Martin, 73529 Schwäbisch Gmünd (DE)
(74) Vertreter: Lorenz, Werner, Dr.-Ing.
(86) Internationale Anmeldenummer: EP9800238
(87) Internationale Veröffentlichungsnummer: WO98031496

(56) Entgegenhaltungen:
- FR-A- 2 677 568
- US-A- 5 032 702
- PATENT ABSTRACTS OF JAPAN vol. 9, no. 319 (M-439), 14.Dezember 1985 & JP 60 152364 A (KOBE SEIKOSHO K.K.), 10.August 1985,

## Beschreibung

Die Erfindung betrifft eine Vorrichtung zum Verbinden mehrerer Einzelteile zu einem Brillengestell nach den Merkmalen des Oberbegriffs von Anspruch 1.

Brillengestelle aus metallischen Werkstoffen werden in der Regel aus Einzelteilen zusammengesetzt, die durch Löten miteinander verbunden werden. Zu den Einzelteilen gehören zwei Augenränder, eine oder mehrere Brücken, die die Augenränder miteinander verbinden, seitlich angebrachte Schließblöcke, mit denen die Augenränder wieder geöffnet werden können (zur Gläsermontage), Oberbalken, Stegstützen, Dekorteile sowie seitlich befestigte Backenteile, an die in der Regel die Bügel befestigt werden.

Die Einzelteilgruppen (z.B. Augenränder und Brücke) sind bei bekannten Lötvorrichtungen in einen Werkstückhalter gelegt, in den die Brillenform eingearbeitet ist, und werden darin pneumatisch oder mechanisch gespannt, damit diese nicht verrutschen.

Bei den aus der Praxis bekannten Vorrichtungen ist der Werkstückhalter mit der Arbeitstischplatte starr verbunden. Das Erwärmgerät bzw. der HF-Außenkreis wird zur Lötstelle ausgerichtet und ebenfalls mit der Tischplatte fest verbunden.

Nachdem die Einzelteile eingelegt und festgespannt sind, wird das Erwärmgerät, welches in der Regel einen Arbeitsinduktor mit offenen Kupferröhren aufweist und durch seitliche Öffnungen in dem Werkstückhalter zur Lötstelle ausgerichtet ist, aktiviert.Die dadurch entstehende Wärme erhitzt die Lötstelle und verbindet somit die Einzelteile zu einer Baugruppe. Das dazu benötigte Lot wird der Lötstelle zugeführt. Nach dem Löten wird die Spannung entlastet, so daß die verlötete Bauteilgruppe eines Brillengestelles dem Werkstückhalter entnommen werden kann.

Ein Nachteil bei dieser bekannten Anordnung besteht darin, daß bei dem Lötvorgang die Gefahr einer Kollision zwischen den Kupferröhren zum Erwärmen des Lotes und der Form besteht, was einen Kurzschluß mit einer Beschädigung des Arbeitsinduktors zur Folge hat.

Des weiteren werden mit einer derartigen Lötvorrichtung hohe Fertigungskosten verursacht, da zum einen die Brillenform aufwendig in den Werkstückhalter eingefräst werden muß und zum anderen vor jedem einzelnen Lötvorgang erhebliche Rüstzeiten anfallen, da der Arbeitsplatz für jede Brillenbaugruppe neu eingerichtet werden muß. Dies erfordert eine große Anzahl von eingerichteten Lötarbeitsplätzen pro Modell und hat bei einem Produktmix, wenn unterschiedliche Brillengestelltypen in wechselnder Reihenfolge gefertigt werden sollen, erhebliche Stillstandszeiten durch Rüstzeiten, welche die Rentabilität senken zur Folge.

Der Erfindung liegt daher die Aufgabe zugrunde, eine Vorrichtung der eingangs beschriebenen Art zu schaffen, welche bei geringem Verschleiß der Lötwerkzeuge eine präzise, qualitativ hochwertige und gleichzeitig schnelle und kostengünstige Verlötung von Brilleneinzelteilen zu kompletten Brillen in einem Arbeitsgang ermöglicht.

Diese Aufgabe wird durch die Merkmale des Anspruches 1 gelöst.

Nach der Erfindung ist der in der Lötzentrierspitze integrierte Arbeitsinduktor von einem Keramikaußenteil umgeben, so daß er gegen Beschädigungen beim Hinführen an die Lötstelle und einem Kurzschluß geschützt ist.

Dabei ist es vorteilhaft, wenn das Keramikaußenteil zum freien Ende hin an seiner Außenkontur einen Zentrierkonus aufweist, der mit einem entsprechenden konischen Abschnitt der Bohrungen des Werkstückhalters zusammenwirkt.

Der Zentrierkonus bewirkt, daß die Lötzentrierspitze und damit das Lötzentrum präzise und bei allen Werkstücken mit gleichbleibender Qualität zur Verbindungsstelle ausgerichtet ist,-und der Werkstückhalter beim Einführen der Lötzentrierspitze automatisch ausgerichtet wird.

Besondere Vorteile bietet die Ausgestaltung des Werkstückhalters als frei bewegliches, flexibles Bauteil, in das die Form einer Brille einerodiert ist.

So können mit dem erfindungsgemäßen Werkstückhalter, welcher klein und handlich ausgestaltet sein kann, die Brillengestelle autark vorbereitet und dann an einem zweiten Arbeitsplatz gelötet werden können. Man spart sehr viel Zeit, sowohl um die Einzelteile in der Form des Werkstückhalters zu fixieren als auch um die Arbeitsinduktoren den einzelnen Lötstellen präzise zuzuordnen. Ferner werden die Werkstatteinrichtungen besser genutzt, weil nunmehr die Rüstvorgänge von der Lötstelle zum Arbeitsinduktor entfallen, so daß ohne Unterbrechung ständig gelötet werden kann.

Das Erodieren erübrigt vorteilhafterweise ein aufwendiges und teures Einfräsen der Form und erzeugt gegenüber einem CNC-Fräsverfahren, bei dem Hinterschneidungen auftreten, exakte, senkrechte Formwände, die die Einzelteile präzise zueinander anordnen und ein leichtes Entnehmen der verlöteten Einzelteile aus der Form ermöglichen.

In der Beschreibung und in den Ansprüchen sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen zusammenfassen.

Weitere Vorteile und Einzelheiten werden anhand eines nachfolgend beschriebenen Ausführungsbeispieles erläutert, das in der Zeichnung dargestellt ist.

Es zeigt:

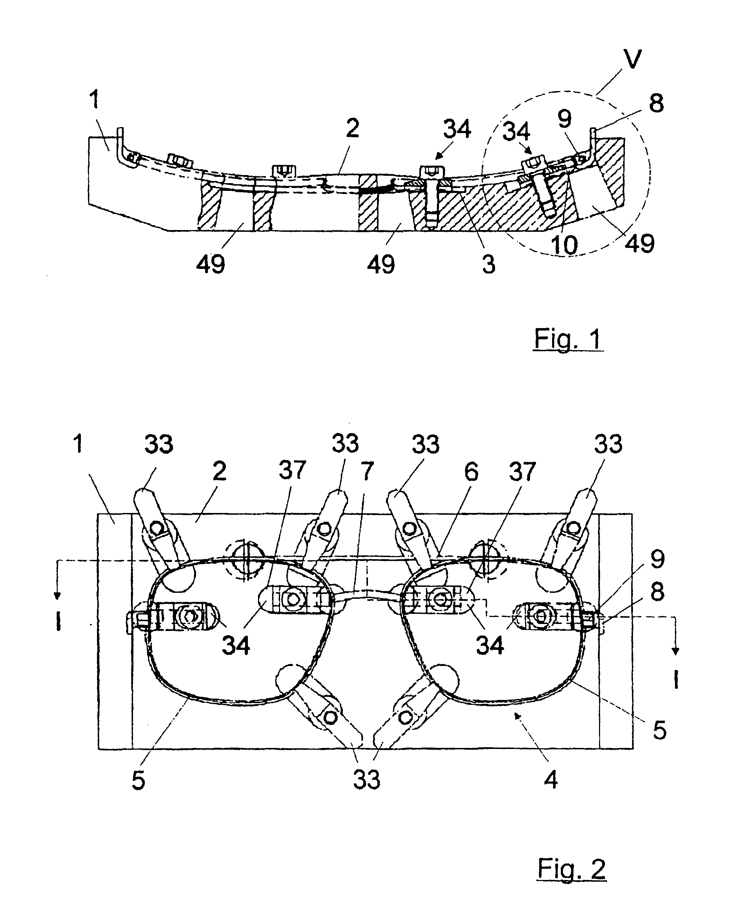

- Fig. 1: einen Schnitt entsprechend der Linie I - I in Fig. 2, wobei zur besseren Darstellung teilweise auf eine Schraffur verzichtet wurde;
- Fig. 2: eine Draufsicht auf einen Werkstückhalter mit festgespannten Einzelteilen;
- Fig. 3: einen Längsschnitt durch ein Lötwerkzeug;
- Fig. 4: einen vergrößerten teilweisen Längsschnitt entsprechend des Bereichs IV in Fig. 3;
- Fig. 5: einen vergrößerten Ausschnitt entsprechend dem Bereich V in Fig. 1;
- Fig. 6: die Konturen einer Verbindungsstelle in einer Draufsicht entsprechend dem Bereich VI in Fig. 5;
- Fig. 7: einen vergrößerten Schnitt im Bereich eines Spannwerkzeugs;

Mit 1 ist ein Werkstückhalter bezeichnet, in den eine Form 3 für ein Brillengestell 4 eingearbeitet ist. Die Form 3 wird durch Elektroerosion hergestellt, indem eine verkupferte bzw. galvanisierte Urform des Brillengestells 4 eine Elektrode und der Werkstückhalter, der aus einer Leichtmetallegierung hergestellt ist, die andere Elektrode bildet. Das Erodieren erzeugt exakte, senkrechte Formwände, die die Einzelteile, nämlich Augenränder 5, eine obere Brücke 6, eine untere Brücke 7, Backenteile 8 und Schließblöcke 9 sowie Dekorteile präzise zueinander anordnen.

Um den Materialabtrag beim Erodieren gering zu halten, erhält der Werkstückhalter eine vorgefräste Mulde 2, die der Wölbung des Brillengestells 4 entspricht.

In der Form 3 werden die genannten Einzelteile 5-8 eingelegt und durch Spannwerkzeuge 33, 34 festgehalten. Da die Spannwerkzeuge 33, 34 am Werkstückhalter 1 angebracht sind, können die Einzelteile 5-8 separat vom Lötvorgang in den Werkstückhalter 1 eingelegt und befestigt werden, so daß die Brillengestelle 4 an einem Arbeitsplatz eingelegt und festgespannt und an einem anderen Arbeitsplatz gelötet bzw. entnommen werden können. Dadurch entfällt ein aufwendiges Rüsten und Justieren am Lötarbeitsplatz, an dem während des Einlegevorgangs weitergearbeitet werden kann.

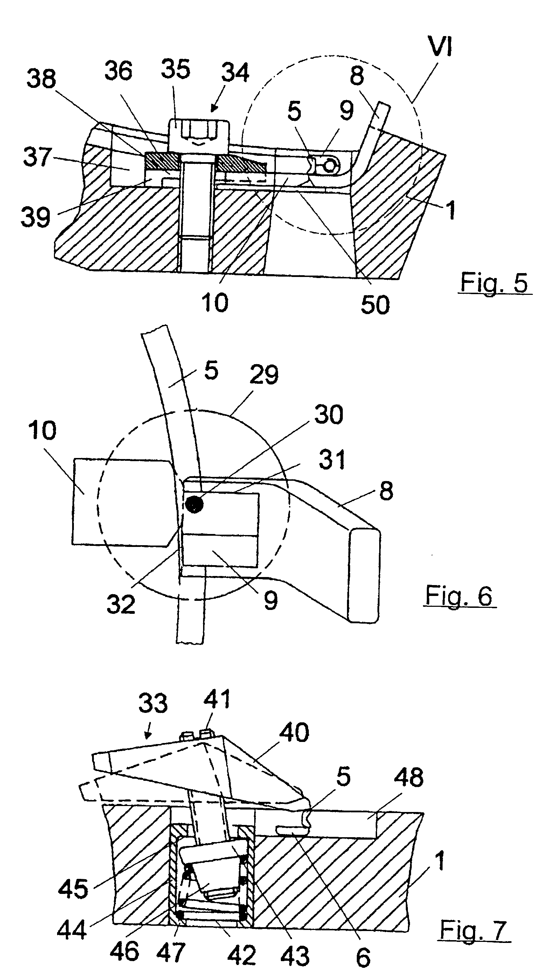

Das Spannwerkzeug 34 hat eine Spannschraube 35, die ein Halteglied 36 gegen das Keramikteil 10 drückt. Dabei stützt sich ein Ende des Haltegliedes 36 auf dem Keramikteil 10 ab und das andere über einen Stützbund 39 am Werkstückhalter 1 ab. Wie aus Fig. 5 ersichtlich, schließt sich das Backenteil 8 an das Keramikteil 10 bündig an. Das Keramikteil 10 und das Backenteil 8 können dabei auf einer Stütz- und Ausgleichscheibe 50 aufliegen. Das Keramikteil 10 wird seitlich von einer Nut 38 des Halteglieds 36 geführt. Im Bereich der Verbindungsstelle 29 besitzt der Werkstückhalter 1 eine Tasche 37, deren Tiefe auf das Backenteil 8 abgestimmt ist. Wäre die Tasche 37 zu tief ausgefräst, könnte das Backenteil 8 nicht korrekt an den Augenrand 5 und das Keramikteil 10 anschließen. Abweichungen können allerdings durch die Stütz- und Ausgleichsscheibe 50 ausgeglichen werden.

Die Spannwerkzeuge 33 dienen vor allem dazu, die Augenränder 5 und die obere Brücke 6 oder Dekorteile in dem Werkstückhalter 1 zu fixieren. Wie Fig. 7 zeigt, haben sie einen Spannhebel 40, der in seinem mittleren Bereich mit einem Stift 41, vorzugsweise in Form eines Gewindestifts, verbunden ist. Am freien Ende des Stifts 41 ist ein Druckstück 43 vorgesehen, das in einem Führungsgehäuse 44 zusammen mit einer Druckfeder 42 angeordnet ist. Das Führungsgehäuse 44 ist fest mit dem Werkstückhalter 1 verbunden und kann mit diesem auch einstückig ausgebildet sein. Die Druckfeder 42, die sich am Führungsgehäuse 44 an einem Bund 47 abstützt, drückt das Druckstück gegen eine Anschlagfläche 45. Wird der Spannhebel mit einem Ende über den Augenrand verschoben, stellt sich der Stift schräg. Die Druckfeder wird zusammengedrückt, wodurch eine Spannkraft vom Spannhebel auf den Augenrand 5 und die obere Brücke 6 entsteht. Die Vorspannung und damit die Anpreßkraft kann verstellt werden, indem der Gewindestift 41 mehr oder weniger in den Spannhebel 40 oder das Druckstück 43 geschraubt wird.

Im Bereich des Spannwerkzeugs 33 ist die Form 3 zu einer Tasche 48 erweitert. Das Spannwerkzeug 33 wird gelöst, indem der Spannhebel 40 und der Stift 41 vom Augenrand 50 weggekippt und soweit verdreht werden, daß sich das Ende des Spannhebels 40 neben der Tasche 48 am Werkzeughalter 1 abstützen kann. Die Druckfeder 42 wird dabei zweckmäßigerweise durch einen konischen Führungszapfen 46 geführt, der mit dem Druckstück 43 verbunden ist.

Der Werkstückhalter 1 besitzt Bohrungen 49, die von der Form 3 für das Brillengestell 4 zur gegenüberliegenden Seite führen und sich zur Form 3 hin konisch verjüngen. In die Bohrungen 49 werden Lötzentrierspitzen 12A eines Lötwerkzeuges 12 eingesetzt, und zwar nacheinander oder gleichzeitig, von Hand oder automatisch. Sie sind daher zum Brillengestell 4 so ausgerichtet, daß ein Lötzentrum 30 der Lötzentrierspitze 12A eine optimale Position zu der Verbindungsstelle 29 einnimmt. Diese Position liegt z.B. bei der Verbindung des Augenrands 5 mit dem Backenteil 8 weniger als 1 mm von einer zum oberen Teil des Augenrands 5 weisenden Kante 31 und einer inneren Kante 32 des Schließblocks 9 entfernt. Sind einmal die Form 3 und die Bohrungen 49 präzise zueinander ausgerichtet, können die Brillengestelle 4 mit gleichbleibender Qualität und Präzision gefertigt werden.

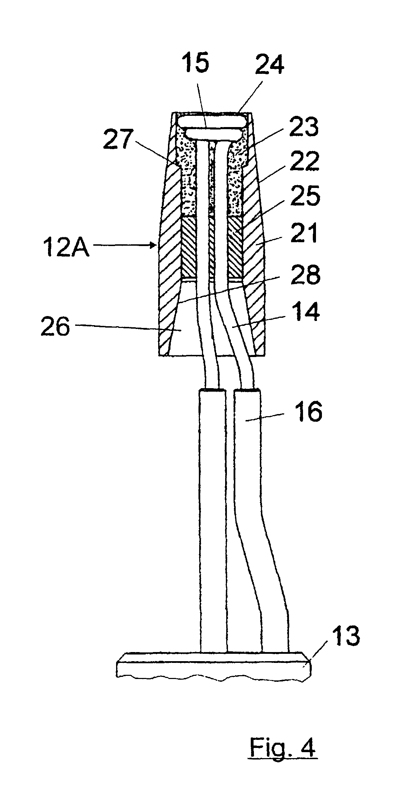

Die Lötzentrierspitze 12A ist in Fig. 4 näher dargestellt. Sie besitzt einen Arbeitsinduktor 15, der über Einlötröhrchen 16 mit einem Induktor bzw. HF-Außenkreis 13 in dem Lötwerkzeug 12 verbunden ist.

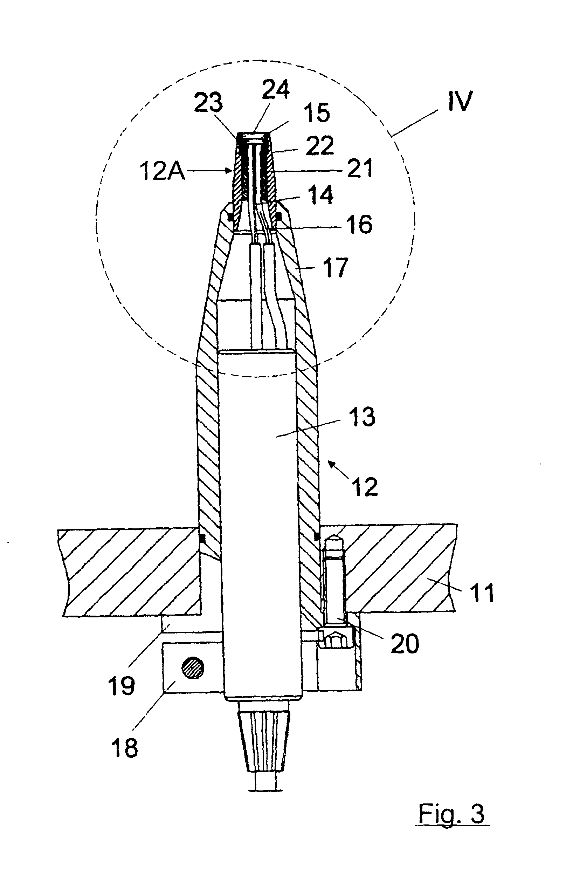

In Fig. 3 ist ersichtlich, daß ein Gehäuse 17 den HF-Außenkreis 13 umgibt, der mittels eines Klemmrings 18 in diesem gehalten wird. Das Gehäuse 17 besitzt einen Flansch 19, der mit einer Schraube 20 an einer Tischplatte befestigt ist.

In das freie Ende des Gehäuses 17 ist die Lötzentrierspitze 12A eingesetzt, die den Arbeitsinduktor 15 mit den Induktorrohren 14 enthält. Der sich so ergebende Hohlraum 26 ist im Bereich des Arbeitsinduktors 15 mit einer Keramikmasse 23 ausgefüllt. Eine dünne Keramikschicht 24, die Bestandteil des Keramikaußenteils 21, der Keramikmasse 23 oder ein zusätzliches Bauteil sein kann, deckt den Arbeitsinduktor 15 stirnseitig ab.

Damit sich die Keramikmasse 23 im harten Zustand nicht axial zum HF-Außenkreis 13 verschieben kann, hat der Hohlraum 26 des Keramikaußenteils 21 eine Verengung 27 in Form eines Absatzes. An diesen Absatz schließt sich zum HF-Außenkreis 13 hin eine Bohrung mit einer geschliffenen Passung an, in die ein Zentrierkörper 25 eingesetzt ist. In dem Zentrierkörper 25 sind die Induktorrohre 14 gehalten, so daß diese zum Keramikaußenteil 21 eine definierte Lage erhalten. An die Paßfläche des Zentrierkörpers 25 schließt sich eine konische Erweiterung 28 an. Sie schafft den Freiraum, um die Induktorrohre 14 ohne Zwang mit den Einlötröhrchen 16 des HF-Außenkreises 13 zu verbinden. Das Gehäuse 17 und das Keramikaußenteil 21 schließen die Anpaßteile 16 und den Arbeitsinduktor 15 mit den Induktorrohren 14 vollständig ab, so daß sie vor Beschädigungen zuverlässig geschützt sind. Ferner ist das Lötwerkzeug 12 stabil genug, um den Werkstückhalter 1 zu tragen, der auf das Keramikaußenteil 21 aufgesetzt wird.

Das Keramikaußenteil 21 greift dabei mit einem Zentrierkonus 22 an seiner Außenkontur in die entsprechend konisch gestalteten Bohrungen 49 des Werkstückhalters 1. Dadurch kann das Lötwerkzeug 12 in wenigen Sekunden sicher und präzise in die optimale Position zu dem Werkstück, dem Brillengestell 4, gebracht werden. Ist die Lötstelle ausreichend erhitzt, wird das Lot von der offenen Seite der Form her zur Lötstelle gebracht.

Es ist denkbar, daß nur mit einem Lötwerkzeug 12 gearbeitet wird und die Verbindungsstellen 29 nacheinander gelötet werden. Unter Umständen kann es jedoch auch vorteilhaft sein, mehrere Lötwerkzeuge 12 gleichzeitig einzusetzen, um die Lötstellen gleichzeitig oder in kurzer Aufeinanderfolge zu erhitzen.

## Patentansprüche

1. Vorrichtung zum Verbinden mehrerer Einzelteile (5-8) zu einem Brillengestell (4) durch Löten mit einem Werkstückhalter (1), in dem eine nach oben offene Form (3) des Brillengestells (4) eingearbeitet ist, in der die Einzelteile (5-8) fixierbar sind, und mit einem Lötwerkzeug (12) mit einer Lötzentrierspitze (12A), welche einen Arbeitsinduktor (15) aufweist, wobei in dem Werkstückhalter (1) Bohrungen (49) zum Heranführen der Lötzentrierspitze (12A) an die zu verbindende Stelle (29) vorgesehen sind,
**dadurch gekennzeichnet, daß**
der Arbeitsinduktor (15) von einem Keramikaußenteil (21) umgeben ist und ein Hohlraum (26) zwischen dem Keramikaußenteil (21) und dem Arbeitsinduktor (15) mit einer Keramikmasse (23) axial wenigstens teilweise ausgefüllt ist.

2. Vorrichtung nach Anspruch 1,
**dadurch gekennzeichnet, daß** das Keramikaußenteil (21) zum freien Ende hin an seiner Außenkontur einen Zentrierkonus (22) aufweist, der mit einem entsprechenden Zentrierabschnitt in den Bohrungen (49) des Werkstückhalters (1) zusammenwirkt.

3. Vorrichtung nach einem der vorstehenden Ansprüche,
**dadurch gekennzeichnet, daß**
der Arbeitsinduktor (15) stirnseitig wenigstens teilweise mit einer dünnen Keramikschicht (24) abgedeckt ist.

4. Vorrichtung nach einem der vorstehenden Ansprüche,
**dadurch gekennzeichnet, daß**
der Arbeitsinduktor (15) als Wendel geformt ist und das Keramikaußenteil (21) in dem Hohlraum (26) eine Verengung (27) aufweist.

5. Vorrichtung nach einem der vorstehenden Ansprüche,
**dadurch gekennzeichnet, daß**
der Arbeitsinduktor (15) im Keramikaußenteil (21) durch einen Zentrierkörper (25) ausgerichtet ist.

6. Vorrichtung nach einem der vorstehenden Ansprüche,
**dadurch gekennzeichnet, daß**
das Keramikaußenteil (21) in ein Gehäuse (17) eingesetzt ist, das einen HF-Außenkreis (13) ummantelt.

7. Vorrichtung nach einem der vorstehenden Ansprüche,
**dadurch gekennzeichnet, daß**
der Hohlraum (26) in Richtung des HF-Außenkreises (13) eine konische Erweiterung (28) aufweist und zwischen der Verengung (27) und der Erweiterung (28) eine geschliffene Passung für den Zentrierkörper (25) aufweist.

8. Vorrichtung, nach Anspruch 1,
**dadurch gekennzeichnet, daß**
der Werkstückhalter (1) ein frei bewegbares Bauteil darstellt, in das die Form (3) für das Brillengestell (4) durch Erodieren eingebracht ist.

9. Vorrichtung nach Anspruch 8,
**dadurch gekennzeichnet, daß** die Form (3) in eine vorgefräste Mulde (2) des Werkstückhalters (1) eingebracht ist.

10. Vorrichtung nach einem der vorstehenden Ansprüche,
**dadurch gekennzeichnet, daß**
der Werkstückhalter (1 aus einer Leichtmetallegierung besteht.

11. Vorrichtung nach einem der vorstehenden Ansprüche,
**dadurch gekennzeichnet, daß**
die Lötzentrierspitze (12A) durch die Bohrungen (49) von der Seite des Werkstückträgers (1) zuführbar ist, die dem Brillengestell (4) gegenüber liegt.

12. Vorrichtung nach einem der vorstehenden Ansprüche,
**dadurch gekennzeichnet, daß**
das Lötzentrum (30) an der Verbindungsstelle (29) eines Keramikteils (10), eines Augenrands (5), eines Schließblocks (9) und eines Backenteils (8) auf definierten Abstand von einer zum oberen Teil des Augenrands (5) weisende Kante (31) und einer inneren Kante (32) des Schließblocks (9) entfernt liegt.

13. Vorrichtung nach einem der vorstehenden Ansprüche,
**dadurch gekennzeichnet, daß**
am Werkstückhalter (1) Spannwerkzeuge (33, 34) angebracht sind, mittels denen die Einzelteile (5-8) in dem Werkstückhalter (1) fixierbar sind.

## Claims

1. A device for connecting a plurality of individual parts (5-8) to form a spectacle frame (4) by soldering, comprising a workpiece holder (1) in which an upwardly open template (3) of the spectacle frame (4) is formed, in which template (3) the individual parts (5-8) are fixable, and a soldering tool (12) with a solder centring tip (12A) which has a work inductor (15), apertures (49) which permit the solder centring tip (12A) to be applied to the connection point (29) being provided in the workpiece holder (1), **characterised in that** the work inductor (15) is surrounded by a ceramic outer part (21), and a cavity (26) between the ceramic outer part (21) and the work inductor (15) is axially filled at least partially with a ceramic composition (23).

2. A device according to Claim 1, **characterised in that** the ceramic outer part (21) has towards the free end of its outer contour a centring cone (22) which cooperates with a corresponding centring portion in the apertures (49) of the workpiece holder (1).

3. A device according to one of the preceding claims, **characterised in that** the end face of the work inductor (15) is covered at least partially with a thin ceramic layer (24).

4. A device according to one of the preceding claims, **characterised in that** the work inductor (15) has the form of a helix and the ceramic outer part (21) has a narrowed portion (27) in the cavity (26).

5. A device according to one of the preceding claims, **characterised in that** the work inductor (15) is aligned in the ceramic outer part (21) by means of a centring body (25).

6. A device according to one of the preceding claims, **characterised in that** the ceramic outer part (21) is inserted in a housing (17) encased by an HF outer circuit (13).

7. A device according to one of the preceding claims, **characterised in that** the cavity (26) has a conically widened portion (28) in the direction of the HF outer circuit (13) and has a portion ground to fit the centring body (25) between the narrowed portion (27) and the widened portion (28).

8. A device according to Claim 1, **characterised in that** the workpiece holder (1) is a freely movable component in which the template (3) for the spectacle frame (4) is formed by erosion.

9. A device according to Claim 8, **characterised in that** the template (3) is inserted in a pre-milled recess (2) in the workpiece holder (1).

10. A device according to one of the preceding claims, **characterised in that** the workpiece holder (1) consists of a light metal alloy.

11. A device according to one of the preceding claims, **characterised in that** the solder centring tip (12A) is insertable through the apertures (49) from the side of the workpiece holder (1) facing away from the spectacle frame (4).

12. A device according to one of the preceding claims, **characterised in that** the soldering centre (30) is located at the connection point (29) of a ceramic part (10), a lens rim (5), a hinge block (9) and an arm member (8), and is spaced at a defined distance from an edge (31) facing towards the upper part of the lens rim (5) and from an inner edge (32) of the hinge block (9).

13. A device according to one of the preceding claims, **characterised in that** clamping tools (33, 34) are fitted to the workpiece holder (1), by means of which clamping tools (33, 34) the individual parts (5-8) are fixable in the workpiece holder (1).

## Revendications

1. Dispositif pour assembler plusieurs pièces élémentaires (5-8) pour former une monture de lunettes (4) par soudage, comprenant un support de pièces (1), dans lequel est formée une forme (3) de la monture des lunettes (4) qui s'ouvre vers le haut et dans laquelle les pièces élémentaires (5-8) peuvent être immobilisées, et un outil de soudage (12) comportant une pointe de centrage de soudage (12A), laquelle comporte un inducteur de travail (15), des alésages (49) étant prévus dans le support de pièces (1) pour guider la pointe de centrage de soudage (12A) dans la zone à assembler (29),
**caractérisé en ce que**
l'inducteur de travail (15) est entouré d'une partie extérieure en céramique (21) et une cavité (26) entre la partie extérieure en céramique (21) et l'inducteur de travail (15) est au moins partiellement remplie d'une masse céramique (23) dans la direction axiale.

2. Dispositif selon la revendication 1,
caractérisé é en ce que
la partie extérieure en céramique (21) comporte, vers l'extrémité libre, sur son contour extérieur, un cône de centrage (22) qui coopère avec un segment de centrage correspondant dans les alésages (49) du support de pièces (1).

3. Dispositif selon l'une des revendications précédentes,
**caractérisé en ce que**
en position frontale, l'inducteur de travail (15) est recouvert, au moins partiellement, d'une mince couche de céramique (24).

4. Dispositif selon l'une des revendications précédentes,
**caractérisé en ce que**
l'inducteur de travail (15) présente la forme d'une hélice, et **en ce que** la partie extérieure en céramique (21) comporte un rétrécissement (27) dans la cavité (26).

5. Dispositif selon l'une des revendications précédentes,
**caractérisé en ce que**
l'inducteur de travail (15) est aligné à l'intérieur de la partie extérieure en céramique (21) par un corps de centrage (25).

6. Dispositif selon l'une des revendications précédentes,
**caractérisé en ce que**
la partie extérieure en céramique (21) est encastrée dans un boîtier (17) qui entoure un circuit extérieur HF (13).

7. Dispositif selon l'une des revendications précédentes,
**caractérisé en ce que**
la cavité (26) comporte un élargissement conique (28) en direction du circuit extérieur HF (13) et comporte, entre le rétrécissement (27) et l'élargissement (28) un ajustement fendu pour le corps de centrage (25).

8. Dispositif selon la revendication 1,
**caractérisé en ce que**
le support de pièces (1) représente un élément librement mobile, dans lequel la forme (3) pour la monture de lunettes (4) est formée par érosion.

9. Dispositif selon la revendication 8,
**caractérisé en ce que**
la forme (3) est formée dans une empreinte (2) préalablement fraisée du support de pièces (1).

10. Dispositif selon l'une des revendications précédentes,
**caractérisé en ce que**
le support de pièces (1) est fait en un alliage de métal léger.

11. Dispositif selon l'une des revendications précédentes,
**caractérisé en ce que**
la pointe de centrage de soudage (12A) peut être amenée à travers les alésages (49) en provenance du côté du support de pièces (1) qui est en face de la monture de lunettes (4).

12. Dispositif selon l'une des revendications précédentes,
**caractérisé en ce que**
le centre de soudage (30) se trouve dans la zone d'assemblage (29) d'une partie en céramique (10), d'un cercle de lunette (5), d'un bloc de fermeture (9) et d'une partie de mâchoire (8) à une distance définie d'un bord (31) pointant vers la partie supérieure du bord de lunettes (5) et d'une arête intérieure (32) du bloc de fermeture (9).

13. Dispositif selon l'une des revendications précédentes,
**caractérisé en ce que**,
sur le support de pièces (1) sont disposés des outils de serrage (33, 34) au moyen desquels les pièces élémentaires (5-8) peuvent être immobilisées dans le support de pièces (1).
